# EUROPEAN PATENT APPLICATION

(11) **EP 2 713 323 A1**
(43) Date of publication of application: **02.04.2014**
(21) Application number: 12186234.6
(22) Date of filing: 27.09.2012
(51) Int. Cl.: G06Q 10/10

(54) **Apparatus and method pertaining to automatically-suggested emoticons**

(71) Applicant: BlackBerry Limited, Waterloo, ON N2K 0A7 (CA)
(72) Inventor: Shirzadi, Farhoud, Waterloo, Ontario N2L 3W8 (CA); Edgar, Robbie Donald, Waterloo, Ontario N2L 3W8 (CA); Allen, Luke Stephen, Waterloo, Ontario N2L 3W8 (CA)
(74) Representative: Hibbert, Juliet Jane Grace

(57) **Abstract**

These teachings provide for automatically using content from a received text-based message to identify at least one context-relevant emoticon and then automatically displaying that context-relevant emoticon such that a user can select the context-relevant emoticon to include in a text-based response to that received message.

## Description

### Field of Technology

The present disclosure relates to electronic communications and in particular to alphanumeric character-based electronic communications that include emoticons.

### Background

Various approaches to alphanumeric character-based electronic communications are known in the art. Some examples include, but are certainly not limited to, email, so-called texts (or short messages), Instant Messages (IM's), Tweets^{™}, and so forth. In many cases such communications comprise a back-and-forth exchange of individual messages between or amongst two or more parties.

Emoticons are also well known in the art. Generally speaking, an emoticon is a pictorial representation of a facial expression formed using punctuation marks and letters, often intended to express the writer's mood. Emoticons can be used, for example, to alert a reader as to the tenor or temper of a statement, and to this extent can change and/or improve the reader's interpretation of a textual statement. The well-known winking emoticon, ;-), for example, expresses that the writer is perhaps not as serious as their textual expression might otherwise suggest and can help the reader to distinguish, for example, a friendly tease from a challenging criticism. In some cases, emoticons are represented as actual, small, in-line facial representations rather than solely as letters and punctuation marks. As used herein, the expression "emoticons" will be understood to be inclusive in these regards unless a more limited meaning is expressly conveyed.

As useful and helpful as emoticons can be to enrich text-based communications, text writers sometimes fail to make effective use of this tool of expression. In some cases this is because the writer simply forgets to consider the use of one or more emoticons. In other cases the writer may be unaware of a particularly-useful emoticon that could be employed to good purpose in a given message.

### Brief Description of the Drawings

FIG. 1 is a flow diagram in accordance with the disclosure.

FIG. 2 is a top plan schematic representation in accordance with the disclosure.

FIG. 3 is a block diagram in accordance with the disclosure.

FIG. 4 is a block diagram in accordance with the disclosure.

### Detailed Description

The following describes an apparatus and method pertaining to automatically using content from a received message to identify at least one context-relevant emoticon and then automatically displaying that context-relevant emoticon such that a user can select the context-relevant emoticon to include in a response to that received message.

By one approach, the aforementioned content can comprise part or all of the text of the received message. By another approach, in combination with the foregoing or in lieu thereof, the content can comprise one or more emoticons that are included in that received message.

If desired, the context-relevant emoticon(s) can be identified, at least in part, by identifying an emoticon that was previously correlated with corresponding text (such as a specific word or expression). These correlations can be personal to the user, if desired, and/or can be based upon a larger population of users or expert-based decisions in these regards.

If desired, these teachings will accommodate displaying a plurality of different context-relevant emoticons to thereby provide a selection of candidate context-relevant emotions for the user to consider.

In addition to the foregoing, these teachings will also accommodate automatically using content from a draft message being composed by the user as a response to the received message to identify one or more user-relevant emoticons. These user-relevant emoticons, too, can then be automatically displayed to thereby permit the user to select such a user-relevant emoticon for inclusion in the draft message.

So configured, a user's response to a given received message can be enriched by the inclusion of one or more emoticons that correspond to the content of the received message. As one very simple example in these regards, when the received message conveys sad news, the draft response could precede any text entries with a suggested context-relevant emoticon that conveys sadness.

These teachings are highly flexible in practice and are also easily scaled to accommodate as many, or as few, emoticons as may be desired. Accordingly, by one approach, a user can have access to less-common emoticons that are particularly suitable to express a particular emotion in view of the content of a given received message.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

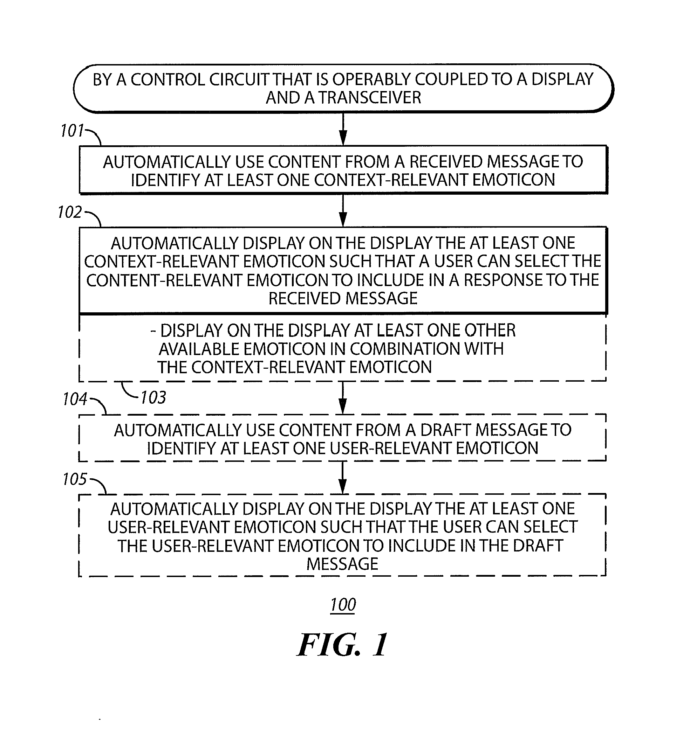

FIG. 1 presents a process 100 that comports with many of these concepts. For the sake of illustration it will be presumed for the purposes of this description that a control circuit that is operably coupled to both a display and a transceiver carries out this process 100.

This process 100 provides for automatically using, at 101, content from a received message to identify at least one context-relevant emoticon. These teachings will accommodate a wide variety of received messages including, for example, email messages, texted/short-message service messages, social-network-services messages (such as updates, comments, postings, and so forth), instant messages, and so forth. For the sake of an illustrative example it will be presumed here that the received message comprises at least some textual content.

These teachings will accommodate a variety of ways to use the received-message content to identify the context-relevant emoticon. By one approach, for example, the control circuit can scan the received message to determine the presence of any predetermined key words or expressions. Examples of possibly useful keywords might include any of a variety of descriptive words (such as adjectives and/or adverbs) such as "horrible," "bad," "awful," "awesome," or "wonderful" and/or nouns of interest (such as "disaster," "birthday," or "vacation").

The number and variety of predetermined key words or expressions applied in these regards can of course vary with the application setting as desired. These teachings will accommodate using as few or as many such words/expressions as one may wish. These teachings will also accommodate using a generic pool of such words/expressions or using customized collections of words/expressions for particular respondents as desired. For example, messages received from particular entities (as identified, for example, by referring to the corresponding communications address for the party who sourced the received message) can trigger the use of specific, corresponding words/expressions in these regards.

By one approach the words/expressions used for these purposes can comprise static selections that do not necessarily vary much over time. By another approach, however, these teachings will readily accommodate a more dynamic approach in these regards. For example, when a user enters an emoticon into a response to a given message, these teachings will accommodate identifying a particular word or expression that likely prompted that use of that emoticon. So configured, these teachings will accommodate identifying emoticons that were previously correlated with specific text (either by this particular user or by some larger user population as desired) and then using that specific text in the future to identify context-relevant emoticon opportunities.

As another approach these teachings will accommodate the use of semantic analysis to facilitate understanding to a greater or deeper extent the substantive meaning of the received message. In such a case, for example, the control circuit can use the received message to come to one or more conclusions regarding the overall sentiment(s) being conveyed by the received message.

The identified emoticon, in turn, is identified as a function of relevance to the extracted context of the received message. A basic precept is to identify an emoticon that expresses a sentiment that closely corresponds to the feeling or sense of at least a portion of the received message. As a very simple illustrative example, if the received message is the sentence, "I've been sick," the identified emoticon can be one that conveys a sense of personal concern, worry, or distress as versus, for example, one that conveys a sense of joy, contentment, or happy surprise.

By one approach, the control circuit identifies the context-relevant emoticon from amongst a local store of emoticons. By another approach, in combination with the foregoing or in lieu thereof, the control circuit identifies the context-relevant emoticon from amongst a remote store of emoticons. This remote store of emoticons might comprise, for example, a server that the control circuit contacts via the aforementioned transceiver.

By one approach the described functionality can comprise identifying only a single such context-relevant emoticon. In this case, the control circuit may be configured to identify a primary sentiment being conveyed by the received message and to then identify an emoticon that best expresses a suitable responsive emotion as regards that primary sentiment. By another approach the control circuit may be configured to identify a plurality of candidate context-relevant emoticons where each candidate comprises a possibly suitable albeit alternative emotional response to that primary sentiment.

By another approach the described functionality can comprise identifying a plurality of context-relevant emoticons where at least some of the emoticons correspond to different sentiments that the received message may convey. For example, a received message such as "I've been sick, but I'm feeling great today." conveys both the idea that the person sending the message has been ill and that they are now feeling much better. In such a case the control circuit may identify one or more context-relevant emoticons that reflect sadness or concern that the person has been ill and another context-relevant emoticon to reflect happiness or approval that the person is now feeling better.

This process 100 provides for automatically displaying, at 102, on the aforementioned display the identified context-relevant emoticon (including, optionally, displaying, at 103, one or more other available emoticons when the control circuit has identified a plurality of possibly suitable context-relevant emoticons). These teachings are highly flexible in these regards and will accommodate a variety of approaches as to the displaying of such information. For example, by one approach, the context-relevant emoticon can be displayed in-line with the text-entry field where the user is entering the contents of their response.

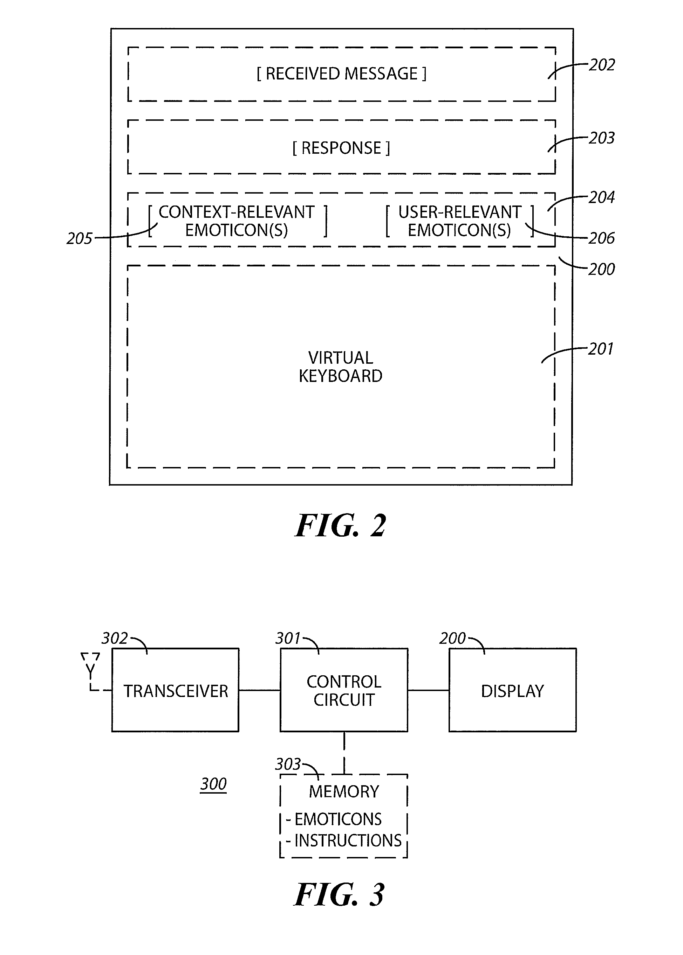

FIG. 2 illustrates another approach in these regards. In this illustrative example, a display 200 (such as, for example, the display of a so-called smartphone or tablet/pad-styled computer) can have a first area 201 that displays a virtual keyboard (by which the user can enter the text of their response) and a second area 202 that displays all or a part of the aforementioned received message. A third area 203, in turn, comprises an area where the user enters the text that comprises their response to the received message. In this particular illustrative example, a fourth area 204 of the display 200 includes at least a first portion 205 where the control circuit displays the aforementioned context-relevant emoticon(s). In such a case, for example, the user can select a particular context-relevant emoticon for inclusion in a response by simply selecting the displayed emoticon (for example, by tapping the desired emoticon when the display 200 comprises a touch-sensitive display as is known in the art).

When the control circuit identifies a plurality of candidate context-relevant emoticons per this process 100, by one approach the control circuit can present all of the candidate context-relevant emoticons in the aforementioned first portion 205. By another approach, this first portion 205 can comprise a scrollable window to permit the user to scroll through a presentation of context-relevant emoticons to thereby view selections that are not otherwise presently viewable. Scrolling, of course, comprises a well-understood capability and requires no further elaboration here.

So configured, a respondent to a given received message can have the benefit of pertinent suggestions regarding worthy context-relevant emoticons to consider including in their corresponding response. Such suggestions can help the user, for example, to enhance their text-based response with an appropriate emotional nuance to thereby help to ensure both an accurate as well as a complete response. These teachings can also serve to help the user enrich their communications by use of less-common emoticons that can serve both to more accurately express a given sensibility while also helping to avoid possibly over-used and/or cliché emoticons.

These teachings are highly flexible in practice. As one illustrative example in these regards, and with continued reference to FIGS. 1 and 2, this process 100 will optionally accommodate also automatically using, at 104, content from the user's draft message to identify at least one user-relevant emoticon. Such usage can again be based, for example, upon noting the entry of particular words and/or expressions and identifying emoticons that have been previously correlated with such words/expressions (either in general and/or by this particular user).

One or more of these user-relevant emoticons can then be automatically displayed, at 105, on the aforementioned display 200. By one approach this displaying can comprise displaying the user-relevant emoticons in a second portion 206 of the fourth area 204 described above. Per this approach, the user-relevant emoticons are visually segregated from the context-relevant emoticons. By another approach, if desired, the user-relevant emoticons can be visually combined with the context-relevant emoticons.

By one approach, when a particular emoticon is both a context-relevant emoticon and a user-relevant emoticon, these teachings will accommodate automatically visually distinguishing such an emoticon to denote its possibly particularly pertinent viability. This might comprise, for example, flashing the presentation of the emoticon on and off or otherwise highlighting the emoticon with varying brightness, contrast, color, and/or sizing settings.

The activities described above can be carried out by a variety of enabling platforms. As a general illustrative example in these regards, and without intending any particular limitations by way of the details of this example, FIG. 3 presents an apparatus 300 configured to carry out one or more of the steps, actions, and/or functions described herein.

In this example, the enabling apparatus 300 includes a control circuit 301 that operably couples to a display 200 and a transceiver 302. This transceiver 302 serves to receive the aforementioned message and can also provide a way by which the apparatus 300 can transmit the user's response that includes, for example, one or more of the context-relevant emoticons contemplated herein. This transceiver 302 can comprise any of a wide variety of wireless and/or non-wireless platforms including any of a variety of short-range and long-range wireless transceivers. Transceivers comprise a well-understood area of prior art practice. As the present teachings are not overly sensitive to any particular choices in these regards, further details in these regards are not presented in this particular example.

Such a control circuit 301 can comprise a fixed-purpose hard-wired platform or can comprise a partially or wholly programmable platform. These architectural options are well known and understood in the art and require no further description here. This control circuit 301 is configured (for example, by using corresponding programming as will be well understood by those skilled in the art) to carry out one or more of the steps, actions, and/or functions described herein.

By one approach the control circuit 301 operably couples to an optional memory 303. The memory 303 may be integral to the control circuit 301 or can be physically discrete (in whole or in part) from the control circuit 301 as desired. This memory 303 can also be local with respect to the control circuit 301 (where, for example, both share a common circuit board, chassis, power supply, and/or housing) or can be partially or wholly remote with respect to the control circuit 301 (where, for example, the memory 303 is physically located in another facility, metropolitan area, or even country as compared to the control circuit 301).

This memory 303 can serve, for example, to non-transitorily store the computer instructions that, when executed by the control circuit 301, cause the control circuit 301 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM).)

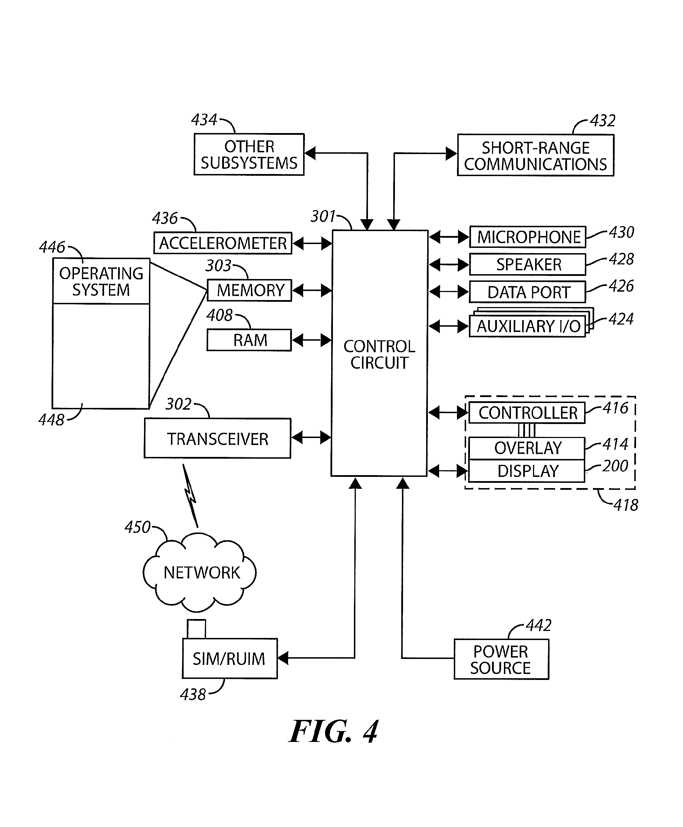

So configured, such an apparatus 300 can readily carry out the activities described herein. Generally speaking, this apparatus 300 can be embodied in any of a wide variety of ways. By one approach, for example, the apparatus can comprise a portable electronic device as shown in FIG. 4.

In this particular illustrative example the portable electronic device comprises a portable communications device. Corresponding communication functions, including data and voice communications, are performed through the aforementioned transceiver 302. The transceiver 302, in turn, receives messages from and sends messages to a wireless network 450.

The wireless network 450 may be any type of wireless network, including, but not limited to, a wireless data networks, a wireless voice network, or a network that supports both voice and data communications. The control circuit 301 may also operably couple to a short-range communication subsystem 432 (such as an 802.11 or 802.16-compatible transceiver and/or a Bluetooth^{™}-compatible transceiver). To identify a subscriber for network access, the portable communication device may utilize a Subscriber Identity Module or a Removable User Identity Module (SIM/RUIM) card 438 for communication with a network, such as the wireless network 450. Alternatively, user identification information may be programmed into the aforementioned memory 303.

A power source 442, such as one or more rechargeable batteries or a port to an external power supply, powers the electronic device. The control circuit 301 may interact with an accelerometer 436 that may be utilized to detect direction of gravitational forces or gravity-induced reaction forces. The control circuit 301 also interacts with a variety of other components, such as a Random Access Memory (RAM) 408, an auxiliary input/output (I/O) subsystem 424, a data port 426, a speaker 428, a microphone 430, and other device subsystems 434 of choice.

The aforementioned display 200 can be disposed in conjunction with a touch-sensitive overlay 414 that operably couples to an electronic controller 416. Together these components can comprise a touch-sensitive display 418 that serves as a graphical-user interface. Information, such as text, characters, symbols, images, icons, and other items may be displayed on the touch-sensitive display 418 via the control circuit 301.

The touch-sensitive display 418 may employ any of a variety of corresponding technologies including but not limited to capacitive, resistive, infrared, surface acoustic wave (SAW), strain gauge, optical imaging, dispersive signal technology, and/or acoustic pulse recognition-based touch-sensing approaches as are known in the art. If the touch-sensitive display 418 should utilize a capacitive approach, for example, the touch-sensitive overlay 414 can comprise a capacitive touch-sensitive overlay 414. In such a case the overlay 414 may be an assembly of multiple stacked layers including, for example, a substrate, a ground shield layer, a barrier layer, one or more capacitive touch sensor layers separated by a substrate or other barrier, and a cover. The capacitive touch sensor layers may comprise any suitable material, such as indium tin oxide (ITO).

The portable communications device includes an operating system 446 and software programs, applications, or components 448 that are executed by the control circuit 301 and are typically stored in a persistent, updatable store such as the memory 303. Additional applications or programs may be loaded onto the portable electronic device through the wireless network 450, the auxiliary I/O subsystem 424, the data port 426, the short-range communications subsystem 432, or any other suitable subsystem 434.

As a communication device, a received signal such as a text message, an e-mail message, or web page download is processed by the communication subsystem and input to the control circuit 301. The control circuit 301 processes the received signal for output to the display 200 and/or to the auxiliary I/O subsystem 424. A user may generate data items, for example e-mail messages, that may be transmitted over the wireless network 450 through the transceiver 302. For voice communications, the overall operation of the portable communications device is similar. The speaker 428 outputs audible information converted from electrical signals, and the microphone 430 converts audible information into electrical signals for processing.

Per the above-disclosed concepts a user can be easily (even transparently) provided with one or more candidate emoticons to consider including in a reply to a given received message. These candidate emoticons can be as varied and/or as limited in number and variety as may be desired and can even comprise emoticons regarding which the user has no prior familiarity.

The present disclosure may be embodied in other specific forms without departing from its essential characteristics. As but one simple example in these regards, these teachings will readily accommodate varying the pool of available context-relevant emoticons from time to time to help the user avoid overusing any particular emoticon. Such variations can be accomplished using any of a variety of push or pull-based methodologies including but not limited to a subscription-based service in these regards. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a display (200);
a transceiver (302); and
a control circuit (301) operably coupled to the display and the transceiver and configured to:
automatically use (101) content from a received message to identify at least one selectable context-relevant emoticon;
automatically display (102) on the display the at least one selectable context-relevant emoticon (205); and
receive a selected context-relevant emoticon to include in a response to the received message.

2. The apparatus of claim 1 wherein the control circuit is further configured to:
automatically use content from a received message to identify a plurality of different context-relevant emoticons; and
automatically display (103) on the display at least some of the plurality of different context-relevant emoticons (205) for selection.

3. The apparatus of claim 1 wherein the control circuit is further configured to automatically use content from the received message to identify at least one context-relevant emoticon by automatically using textual content from the received message.

4. The apparatus of claim 3 wherein the control circuit is further configured to automatically use the textual content from the received message, at least in part, by identifying emoticons that were previously correlated with specific text.

5. The apparatus of claim 1 wherein the control circuit is further configured to identify at least one context-relevant emoticon by accessing at least one of:
a local store (303) of emoticons; and
a remote store of emoticons.

6. The apparatus of claim 1 wherein the control circuit is further configured to display on the display the at least one context-relevant emoticon (205) in combination with other available emoticons (206).

7. The apparatus of claim 1 wherein the control circuit is further configured to:
automatically use (104) content from a draft message to identify at least one selectable user-relevant emoticon;
automatically display (105) on the display the at least one selectable user-relevant emoticon (206); and
receive a selected user-relevant emoticon to include in the draft message.

8. A method comprising:
by a control circuit (301) that is operably coupled to a display (200) and a transceiver (302):
automatically using (101) content from a received message to identify at least one selectable context-relevant emoticon;
automatically displaying (102) on the display the at least one selectable context-relevant emoticon (205); and
receiving a selected context-relevant emoticon to include in a response to the received message.

9. The method of claim 8 wherein automatically using content from a received message to identify at least one selectable context-relevant emoticon comprises automatically using content from a received message to identify a plurality of different selectable context-relevant emoticons and wherein automatically displaying on the display the at least one selectable context-relevant emoticon comprises automatically displaying on the display at least some of the plurality of different selectable context-relevant emoticons (205) for selection by the user.

10. The method of claim 8 wherein automatically using content from a received message to identify at least one selectable context-relevant emoticon comprises automatically using content from the received message to identify at least one context-relevant emoticon by automatically using textual content from the received message.

11. The method of claim 10 wherein automatically using textual content from the received message comprises automatically using the textual content from the received message, at least in part, by identifying emoticons that were previously correlated with specific text.

12. The method of claim 8 wherein identifying at least one context-relevant emoticon comprises, at least in part, accessing at least one of:
a local store (303) of emoticons; and
a remote store of emoticons.

13. The method of claim 8 further comprising:
displaying on the display at least one other available emoticon (206) in combination with the context-relevant emoticon (205).

14. The method of claim 8 further comprising:
automatically using (104) content from a draft message to identify at least one selectable user-relevant emoticon;
automatically displaying (105) on the display the at least one selectable user-relevant emoticon (206);
receiving a selected user-relevant emoticon to include in the draft message.
